# EUROPEAN PATENT APPLICATION

(11) **EP 4 510 468 A1**
(43) Date of publication of application: **19.02.2025**
(21) Application number: 23799269.8
(22) Date of filing: 05.05.2023
(51) Int. Cl.: H04B 10/25, H04B 10/079, G01B 11/00, G01H 11/00

(54) **PHOTOELECTRIC APPARATUS, METHOD FOR DETECTING STATE INFORMATION OF OPTICAL SIGNAL, AND OPTICAL COMMUNICATION SYSTEM**

(30) Priority: 06.05.2022 CN 202210485140
(71) Applicant: Huawei Technologies Co., Ltd., Shenzhen, Guangdong 518129 (CN)
(72) Inventor: LE, Huan, Shenzhen, Guangdong 518129 (CN); CHENG, Xiang, Shenzhen, Guangdong 518129 (CN); JIANG, Tao, Shenzhen, Guangdong 518129 (CN); LUO, Lie, Shenzhen, Guangdong 518129 (CN)
(74) Representative: Goddar, Heinz J.
(86) International application number: PCT/CN2023/092165
(87) International publication number: WO 2023/213283

(57) **Abstract**

This application relates to an optical-electrical apparatus. The optical-electrical apparatus includes an optical-to-electrical conversion circuit, an electrical signal processing circuit, an electrical signal interface circuit, and a status detection circuit. The optical-to-electrical conversion circuit is configured to convert an optical signal into an electrical signal. The electrical signal processing circuit outputs a first parameter of the optical signal based on the electrical signal, where the first parameter includes an optical polarization parameter. The status detection circuit obtains status information of the optical signal based on the first parameter, where the status information of the optical signal is output via the electrical signal interface circuit. The optical-electrical apparatus may simply and quickly obtain a vibration condition of an environment around an optical fiber by detecting the status information of the optical signal that passes through the optical fiber, thereby preventing the optical fiber from being damaged in a timely and accurate manner, and improving stability and reliability of a communication network.

## Description

This application claims priority to Chinese Patent Application No. 202210485140.7, filed with the China National Intellectual Property Administration on May 6, 2022 and entitled "OPTICAL SIGNAL STATUS INFORMATION DETECTION METHOD AND OPTICAL-ELECTRICAL APPARATUS FOR RUNNING DETECTION METHOD", which is incorporated herein by reference in its entirety.

### TECHNICAL FIELD

This application relates to the field of optical communication technologies, and in particular, to an optical signal status information detection method, and an optical-electrical apparatus, an electronic device, an optical communication system, and the like that run the detection method.

### BACKGROUND

With development of optical communication technologies, an optical communication network is increasingly used in various network communication systems. When an optical communication network facility is faulty, for example, an optical fiber is broken or damaged, security, stability, and reliability of the network communication system are greatly affected. However, an environment in which the optical fiber is located is complex, for example, underwater, buried underground, or in a building. When artificial vibration or natural vibration occurs near the optical fiber, the optical fiber is easily broken and damaged. Therefore, a solution for quickly and accurately detecting and reporting the environment in which the optical fiber is located is urgently needed, to prevent and reduce damage to the optical fiber.

### SUMMARY

This application provides an optical signal status information detection method, and an optical-electrical apparatus, an electronic device, and an optical communication system that run the detection method. The optical-electrical apparatus may simply and quickly obtain a vibration condition of an environment around an optical fiber by detecting status information of an optical signal that passes through the optical fiber, thereby preventing the optical fiber from being damaged in a timely and accurate manner, and improving security, stability, and reliability of a communication network.

According to a first aspect, an optical-electrical apparatus is provided. The optical-electrical apparatus includes an optical-to-electrical conversion circuit, an electrical signal processing circuit, an electrical signal interface circuit, and a status detection circuit. The optical-to-electrical conversion circuit is configured to convert an optical signal into an electrical signal. The electrical signal processing circuit is configured to output a first parameter of the optical signal based on the electrical signal, where the first parameter includes an optical polarization parameter. The status detection circuit is configured to obtain status information of the optical signal based on the first parameter, where the status information of the optical signal is output via the electrical signal interface circuit. According to the technical solution, the optical-electrical apparatus can obtain the status information of the optical signal in real time, report the obtained status information of the optical signal, in a timely and accurate manner, to a system to which the optical-electrical apparatus belongs, and take a corresponding preventive measure based on the reported status information of the optical signal, thereby improving security, stability, and reliability of a communication network.

In a feasible implementation, the first parameter further includes: at least one parameter of a pre-forward error correction bit error rate, a post-forward error correction bit error rate, and optical power. These parameters can provide additional current status information of the optical signal from another perspective.

In a feasible implementation, the status information of the optical signal includes a Stokes Stokes vector and/or a Jones Jones vector.

In a feasible implementation, the status information of the optical signal further includes: at least one parameter of an optical polarization state change rate, the pre-forward error correction bit error rate, the post-forward error correction bit error rate, and the optical power. Quality of the optical signal and accurate condition information about an environment around an optical fiber that transmits the optical signal are determined by comprehensively determining a plurality of types of status information of the optical signal.

In a feasible implementation, the electrical signal processing circuit obtains service data based on the electrical signal, and the service data is output via the electrical signal interface circuit. The service data and the status information of the optical signal are output via a same interface circuit, and no interface needs to be added, thereby ensuring compatibility and simplicity.

In a feasible implementation, the electrical signal processing circuit and the status detection circuit are packaged in a single chip.

In a feasible implementation, the status detection circuit further includes an input processing circuit and a status parameter calculation circuit. The input processing circuit is configured to perform sampling and/or average processing on the first parameter. The status parameter calculation circuit is configured to obtain, based on a first parameter obtained through sampling and/or average processing, the status information of the optical signal through processing.

In a feasible implementation, the status detection circuit further includes at least one circuit of a filter circuit, a parameter change rate calculation circuit, and a report control circuit. The filter circuit is configured to filter or select, from the status information of the optical signal, status information that meets a preset condition. The parameter change rate calculation circuit is configured to obtain a change rate of the status information of the optical signal through processing. The report control circuit is configured to configure a report mode of the status information of the optical signal. The filter circuit and the report control circuit may help select target status information of the optical signal, and report the target status information in a proper report mode, thereby avoiding increasing processing load on the system.

In a feasible implementation, the status information of the optical signal is used to determine vibration information of an optical fiber through which the optical signal passes.

According to a second aspect, an electronic device is provided. The electronic device includes a housing, a circuit board, and the optical-electrical apparatus, connected to the circuit board, according to any one of the foregoing feasible implementations.

In a feasible implementation, the electronic device further includes a vibration processing circuit. The vibration processing circuit obtains, based on the status information of the optical signal, the vibration information of the optical fiber through which the optical signal passes, where the vibration processing circuit is located in the optical-electrical apparatus or on the circuit board.

In a feasible implementation, the optical-electrical apparatus according to any one of the foregoing feasible implementations includes a first optical-electrical apparatus and a second optical-electrical apparatus, the first optical-electrical apparatus is configured to report status information of a first optical signal to the electronic device, and the second optical-electrical apparatus is configured to report status information of a second optical signal to the electronic device.

In a feasible implementation, the electronic device is configured to determine, based on the status information of the first optical signal and/or the status information of the second optical signal, to use the first optical-electrical apparatus or the second optical-electrical apparatus to transmit service data. Through comprehensive determining, a more secure and reliable optical-electrical apparatus is selected for service data transmission, thereby improving stability of an entire communication network.

In a feasible implementation, the electronic device is configured to determine, based on the status information of the first optical signal and the status information of the second optical signal, whether a first optical fiber and a second optical fiber belong to a first optical cable, where the first optical fiber is connected to the first optical-electrical apparatus and is configured to transmit the first optical signal, and the second optical fiber is connected to the second optical-electrical apparatus and is configured to transmit the second optical signal. The status information of the optical signals in the two optical fibers is analyzed, so that accuracy of vibration information of environments around the optical fibers can be improved. In addition, network optimization can be performed, to prevent the optical fibers used by an active transmission channel and a standby transmission channel of the service data from being in a same optical cable, thereby improving reliability of the communication network.

According to a third aspect, an optical communication system is provided. The optical communication system includes the electronic device according to any one of the foregoing feasible implementations, and at least one switch or router connected to the electronic device, where the at least one switch or router is configured to perform data communication with the electronic device.

According to a fourth third aspect, a chip is provided. The chip includes an electrical signal processing circuit, an electrical signal processing circuit and a status detection circuit. The electrical signal processing circuit is configured to output: based on an input electrical signal, a first parameter of an optical signal corresponding to the electrical signal, where the first parameter includes an optical polarization parameter. The status detection circuit is configured to obtain status information of the optical signal based on the first parameter, where the status information of the optical signal is output via an electrical signal interface circuit connected to the chip.

In a feasible implementation, the first parameter further includes: at least one parameter of a pre-forward error correction bit error rate, a post-forward error correction bit error rate, and optical power.

In a feasible implementation, the status information of the optical signal includes a Stokes Stokes vector and/or a Jones Jones vector.

In a feasible implementation, the status information of the optical signal further includes: at least one parameter of an optical polarization state change rate, the pre-forward error correction bit error rate, the post-forward error correction bit error rate, and the optical power.

In a feasible implementation, the electrical signal processing circuit is further configured to obtain service data based on the electrical signal, and the service data is output via the electrical signal interface circuit.

In a feasible implementation, the status detection circuit includes an input processing circuit and a status parameter calculation circuit. The input processing circuit is configured to perform sampling and/or average processing on the first parameter. The status parameter calculation circuit is configured to obtain, based on a first parameter obtained through sampling and/or average processing, the status information of the optical signal through processing.

In a feasible implementation, the status detection circuit further includes at least one circuit of a filter circuit, a parameter change rate calculation circuit, and a report control circuit. The filter circuit is configured to filter or select, from the status information of the optical signal, status information that meets a preset condition. The parameter change rate calculation circuit is configured to obtain a change rate of the status information of the optical signal through processing. The report control circuit is configured to configure a report mode of the status information of the optical signal.

In a feasible implementation, the status information of the optical signal is used to determine vibration information of an optical fiber through which the optical signal passes.

According to a fifth aspect, a chip is provided. The chip includes an input processing circuit and a status parameter calculation circuit. The input processing circuit is configured to perform sampling and/or average processing on a first parameter. The status parameter calculation circuit is configured to obtain, based on a first parameter obtained through sampling and/or average processing, status information of an optical signal through processing. The first parameter includes an optical polarization parameter of the optical signal.

In a feasible implementation, the chip further includes at least one circuit of a filter circuit, a parameter change rate calculation circuit, and a report control circuit. The filter circuit is configured to filter or select, from the status information of the optical signal, status information that meets a preset condition. The parameter change rate calculation circuit is configured to obtain a change rate of the status information of the optical signal through processing. The report control circuit is configured to configure a report mode of the status information of the optical signal.

In a feasible implementation, the first parameter further includes: at least one parameter of a pre-forward error correction bit error rate, a post-forward error correction bit error rate, and optical power.

In a feasible implementation, the status information of the optical signal includes a Stokes Stokes vector and/or a Jones Jones vector.

In a feasible implementation, the status information of the optical signal further includes: at least one parameter of an optical polarization state change rate, the pre-forward error correction bit error rate, the post-forward error correction bit error rate, and the optical power.

In a feasible implementation, the status information of the optical signal is used to determine vibration information of an optical fiber through which the optical signal passes.

According to a sixth aspect, an optical signal status information detection method is provided, applied to an optical-electrical apparatus or chip. The method includes: outputting, based on an input electrical signal, a first parameter of an optical signal corresponding to the electrical signal, where the first parameter includes an optical polarization parameter; obtaining status information of the optical signal based on the first parameter; and outputting the status information of the optical signal. According to the technical solution, the status information of the optical signal can be obtained in real time, the obtained status information of the optical signal can be reported to a system in a timely and accurate manner, and a corresponding preventive measure can be taken based on the reported status information of the optical signal, thereby improving security, stability, and reliability of a communication network.

In a feasible implementation, the first parameter further includes: at least one parameter of a pre-forward error correction bit error rate, a post-forward error correction bit error rate, and optical power. These parameters can provide additional current status information of the optical signal from another perspective.

In a feasible implementation, the status information of the optical signal includes a Stokes Stokes vector and/or a Jones Jones vector.

In a feasible implementation, the status information of the optical signal further includes: at least one parameter of an optical polarization state change rate, the pre-forward error correction bit error rate, the post-forward error correction bit error rate, and the optical power. Quality of the optical signal and accurate condition information about an environment around an optical fiber that transmits the optical signal are determined by comprehensively determining a plurality of types of status information of the optical signal.

In a feasible implementation, service data is obtained based on the electrical signal, and the service data and the status information of the optical signal are output via a same electrical signal interface circuit. The service data and the status information of the optical signal are output via the same interface circuit, and no interface needs to be added, thereby ensuring compatibility and simplicity.

In a feasible implementation, after performing sampling and/or average processing on the first parameter, the optical-electrical apparatus obtains, based on a first parameter obtained through sampling and/or average processing, the status information of the optical signal through processing.

In a feasible implementation, the detection method further includes: filtering or selecting, from the status information of the optical signal, status information that meets a preset condition; or obtaining a change rate of the status information of the optical signal through processing; or configuring a report mode of the status information of the optical signal.

In a feasible implementation, the status information of the optical signal is used to determine vibration information of an optical fiber through which the optical signal passes.

According to a seventh aspect, an optical signal status information detection method is provided, applied to an electronic device. The electronic device includes at least one optical-electrical apparatus according to any one of the foregoing feasible implementations. The optical-electrical apparatus performs the optical signal status information detection method according to any one of the foregoing feasible implementations.

In a feasible implementation, the at least one optical-electrical apparatus according to any one of the foregoing feasible implementations includes a first optical-electrical apparatus and a second optical-electrical apparatus, the first optical-electrical apparatus reports status information of a first optical signal to the electronic device, and the second optical-electrical apparatus reports status information of a second optical signal to the electronic device.

In a feasible implementation, the electronic device determines, based on the status information of the first optical signal and/or the status information of the second optical signal, to use the first optical-electrical apparatus or the second optical-electrical apparatus to transmit service data. Through comprehensive determining, a more secure and reliable optical-electrical apparatus is selected for service data transmission, thereby improving stability of an entire communication network.

In a feasible implementation, the electronic device determines, based on the status information of the first optical signal and the status information of the second optical signal, whether a first optical fiber and a second optical fiber belong to a first optical cable, where the first optical fiber is connected to the first optical-electrical apparatus and is configured to transmit the first optical signal, and the second optical fiber is connected to the second optical-electrical apparatus and is configured to transmit the second optical signal. The status information of the optical signals in the two optical fibers is analyzed, so that accuracy of vibration information of environments around the optical fibers can be improved. In addition, network optimization can be performed, to prevent the optical fibers used by an active transmission channel and a standby transmission channel of the service data from being in a same optical cable, thereby improving reliability of the communication network.

According to an eighth aspect, a nonvolatile computer-readable storage medium is provided, storing computer program instructions. When the computer program instructions are executed by a processor, the method according to any one of the foregoing feasible implementations is implemented.

### BRIEF DESCRIPTION OF DRAWINGS

Accompanying drawings included in this specification and constituting a part of this specification and this specification jointly show example embodiments, features, and aspects of this application, and are intended to explain principles of this application.
FIG. 1 is a diagram of a structure of an optical-electrical apparatus in the conventional technology;
FIG. 2A is a diagram of a structure of an optical-electrical apparatus according to an embodiment of this application;
FIG. 2B is a diagram of a structure of an electrical signal processing circuit according to an embodiment of this application;
FIG. 3 is a diagram of a structure of an optical-electrical apparatus according to an embodiment of this application;
FIG. 4 is a flowchart of a processing method according to an embodiment of this application;
FIG. 5 is a diagram of a structure of a status detection circuit according to an embodiment of this application;
FIG. 6 is a diagram of a structure of an electronic device according to an embodiment of this application; and
FIG. 7 is a diagram of a structure of an optical communication system according to an embodiment of this application.

### DESCRIPTION OF EMBODIMENTS

The following describes various example embodiments, features, and aspects of this application in detail with reference to accompanying drawings. Identical reference numerals in the accompanying drawings indicate elements that have same or similar functions. Although various aspects of embodiments are shown in the accompanying drawings, the accompanying drawings are not necessarily drawn in proportion unless otherwise specified.

A specific term "example" herein means "used as an example, an embodiment, or a description". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that a main purpose of this application is highlighted.

A term "and/or" in this specification describes only an association relationship between associated objects and indicates that three relationships may exist. For example, A and/or B may indicate the following three cases: Only A exists, both A and B exist, and only B exists.

In the specification and the claims in embodiments of this application, terms "first", "second", and the like are intended to distinguish between different objects, but do not indicate a specific sequence of the objects. For example, a first range, a second range, and the like are intended to distinguish between different ranges, but do not indicate a specific sequence of the ranges.

In descriptions of embodiments of this application, unless otherwise stated, "at least one" means one or more, and "a plurality of" means two or more. For example, a plurality of processing units mean two or more processing units, and a plurality of systems mean two or more systems.

The described embodiments are merely some but not all of embodiments of this application. All other embodiments obtained by a person of ordinary skill in the art based on embodiments of this application without creative efforts shall fall within the protection scope of this application.

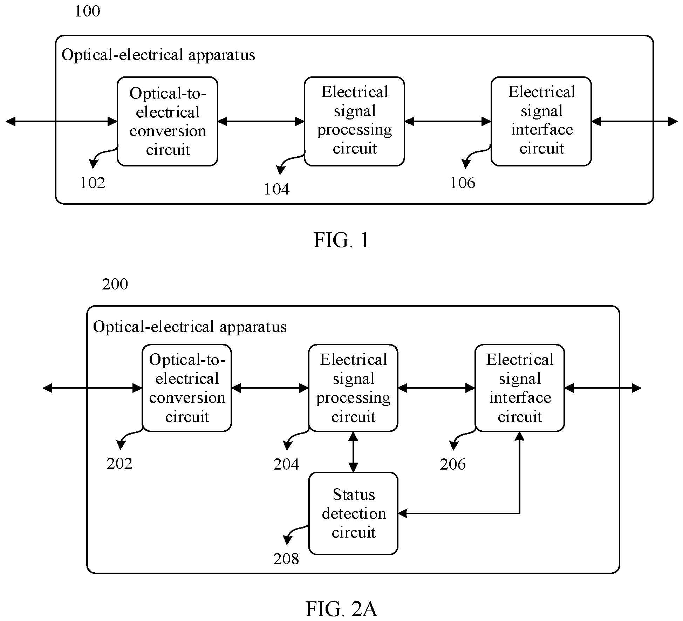

FIG. 1 is a diagram of a structure of an optical-electrical apparatus 100. The optical-electrical apparatus 100 includes at least an optical-to-electrical conversion circuit 102, an electrical signal processing circuit 104, and an electrical signal interface circuit 106. The optical-electrical apparatus 100 includes an optical-electrical device, for example, an optical module, an optical switch, an optical router, or an optical modem, including the foregoing circuits.

The optical-to-electrical conversion circuit 102 is configured to: receive an optical signal, transmit an optical signal, and convert an optical signal into an electrical signal. After processing the electrical signal to obtain service data, the electrical signal processing circuit 104 outputs the service data, via the electrical signal interface circuit 106, to an optical communication system to which the optical-electrical apparatus 100 belongs.

However, in a process in which the optical signal is propagated in an optical fiber, an environment in which the optical fiber is located may vibrate due to natural or human reasons, causing an exception in a communication network, for example, the optical fiber is damaged or broken. The reason for such vibration may be an earthquake in nature, other ground vibration, or may be a human factor, for example, construction beside an optical fiber line. This is not limited herein. Details are not described one by one. When such an exception occurs, the optical-electrical apparatus 100 cannot upload the environment condition information, in a timely and accurate manner, to the optical communication system to which the optical-electrical apparatus 100 belongs, and therefore cannot prevent or reduce damage to the optical fiber.

FIG. 2A is a diagram of a structure of an optical-electrical apparatus 200 according to an embodiment of this application. The optical-electrical apparatus 200 includes at least an optical-to-electrical conversion circuit 202, an electrical signal processing circuit 204, a status detection circuit 208, and an electrical signal interface circuit 206. The optical-electrical apparatus 200 includes an optical-electrical device, for example, an optical module, an optical switch, an optical router, or an optical modem, including the foregoing circuits. This is not limited. Details are not described herein one by one. According to the technical solution, the optical-electrical apparatus can obtain status information of an optical signal in real time, report the obtained status information of the optical signal, in a timely and accurate manner, to a system to which the optical-electrical apparatus belongs, and take a corresponding preventive measure based on the reported status information of the optical signal, thereby improving security, stability, and reliability of a communication network.

The optical-to-electrical conversion circuit 202 is configured to: receive an optical signal, transmit an optical signal, and convert an optical signal into an electrical signal or convert an electrical signal into an optical signal.

After receiving the electrical signal, the electrical signal processing circuit 204 performs depolarization on the electrical signal, to generate a first parameter related to the optical signal. The first parameter includes an optical polarization parameter of the optical signal, and the first parameter may be a filter coefficient, a multiple-input multiple-output (Multi Input Multi Output, MIMO) coefficient, or other data. This is not limited. Details are not described herein one by one.

The status detection circuit 208 obtains the first parameter sent by the electrical signal processing circuit 204, processes the first parameter, outputs the status information of the optical signal, and outputs and reports the status information of the optical signal, via the electrical signal interface circuit 206, to the system to which the optical-electrical apparatus 200 belongs.

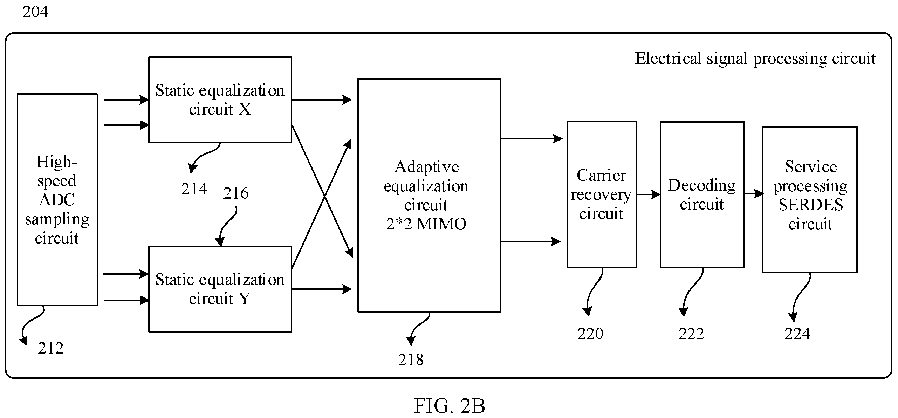

Optionally, as shown in FIG. 2B, the electrical signal processing circuit 204 further includes a high-speed analog-to-digital converter (analog-to-digital converter, ADC) sampling circuit 212. Before depolarization is performed on the electrical signal, high-speed ADC sampling is performed on the electrical signal, to obtain a total of four channels of electrical signals in a complex-number form of two polarization states.

Optionally, the electrical signal processing circuit 204 further includes a static equalization circuit X 214 and a static equalization circuit Y 216, to compensate for the four channels of electrical signals. This compensates for signal damage caused by dispersion effect or the like in an optical signal process.

Optionally, the electrical signal processing circuit 204 further includes an adaptive equalization circuit 218, configured to perform depolarization on the electrical signal by using a MIMO coefficient in a 2*2 form, to obtain data on which depolarization is completed.

Optionally, the electrical signal processing circuit 204 further includes a carrier recovery circuit 220 and/or a decoding circuit 222, to perform an operation like carrier recovery and/or decoding on the data on which depolarization is completed, to obtain normal service data, and output and report the normal service data, via a service processing serializer/deserializer (serdes) circuit 224, to the system to which the optical-electrical apparatus 200 belongs. The decoding circuit may be a decoding circuit like a forward error correction (Forward Error Correction, FEC) decoding circuit. This is not limited. Details are not described herein one by one.

Optionally, the first parameter includes the optical polarization parameter. In a process of converting the optical signal into the electrical signal and obtaining the service data from the electrical signal, the optical-electrical apparatus originally needs to obtain the polarization parameter of the optical signal through parsing. Therefore, the optical-electrical apparatus performs further processing by using the polarization parameter, of the optical signal, obtained through parsing, to obtain the status information of the optical signal that is used to determine vibration information of an optical fiber through which the optical signal passes. The solution has advantages such as simplicity and low costs.

Optionally, the first parameter further includes: at least one parameter of a pre-forward error correction bit error rate, a post-forward error correction bit error rate, and optical power. These parameters can provide additional current status information of the optical signal from another perspective.

Optionally, the status information of the optical signal output by the status detection circuit 208 includes a Stokes Stokes vector and/or a Jones Jones vector.

Optionally, the status information of the optical signal further includes: at least one parameter of an optical polarization state change rate, the pre-forward error correction bit error rate, the post-forward error correction bit error rate, and the optical power.

Optionally, the pre-forward error correction bit error rate, the post-forward error correction bit error rate, and the optical power may be reported, through transparent transmission (without modification or processing) by the status detection circuit 208, to the system to which the optical-electrical apparatus 200 belongs, or after being processed by the status detection circuit 208, the pre-forward error correction bit error rate, the post-forward error correction bit error rate, and the optical power are reported to the system to which the optical-electrical apparatus 200 belongs.

Quality of the optical signal and accurate vibration condition information of an environment around the optical fiber that transmits the optical signal are determined by comprehensively determining a plurality of types of status information of the optical signal.

Optionally, the normal service data and the status information of the optical signal are output and reported, through different electrical signal interfaces or a same electrical signal interface, to the system to which the optical-electrical apparatus 200 belongs. The service data and the status information of the optical signal are output via the same interface circuit, and no interface needs to be added, thereby ensuring compatibility and simplicity. The service data and the status information of the optical signal are output via the different interface circuits, so that flexibility of reporting the status information can be ensured.

Optionally, a rate at which the status information of the optical signal is output and reported to the system to which the optical-electrical apparatus 200 belongs is adjustable.

Optionally, a clock frequency corresponding to the output and report rate ranges from 1 hertz (Hz) to 1 megahertz (MHz). Report response time can reach 1 millisecond. The report rate is adjustable. This helps the system report in a timely manner without causing heavy load on the system.

Optionally, the optical-electrical apparatus 200 determines, based on the status information of the optical signal, the vibration information of the optical fiber through which the optical signal passes, or the system to which the optical-electrical apparatus 200 belongs determines, based on the reported status information of the optical signal, the vibration information of the optical fiber through which the optical signal passes.

Optionally, the status detection circuit 208 may be implemented by using an application-specific integrated circuit (Application Specific Integrated Circuit, ASIC) or another processing circuit. This is not limited herein. Details are not described one by one.

Optionally, a function of the status detection circuit 208 may be implemented by using a software technology.

Optionally, the electrical signal processing circuit 204 includes a circuit that can implement the foregoing functions, for example, an optical digital signal processing (optical digital signal processing, ODSP) circuit. This is not limited herein.

Optionally, the optical-electrical apparatus 200 may be a coherent optical module in an optical module, and the optical-to-electrical conversion circuit 202 is a coherent receiver.

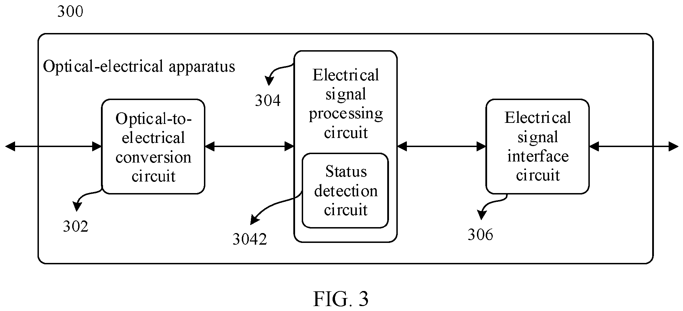

As shown in FIG. 3, in this embodiment, a difference between an optical-electrical apparatus 300 and the optical-electrical apparatus 200 in FIG. 2A lies in that a status detection circuit 3042 belongs to an electrical signal processing circuit 304, and is implemented by some circuits or software functional modules of the electrical signal processing circuit 304. Optionally, the status detection circuit 3042 and the electrical signal processing circuit 304 are packaged in a same chip. Functions of other circuits, such as an optical-to-electrical conversion circuit 302, an electrical signal interface circuit 306, and the electrical signal processing circuit 304, one-to-one correspond to functions of the circuits of the optical-electrical apparatus 200 in FIG. 2A. Details are not described herein one by one.

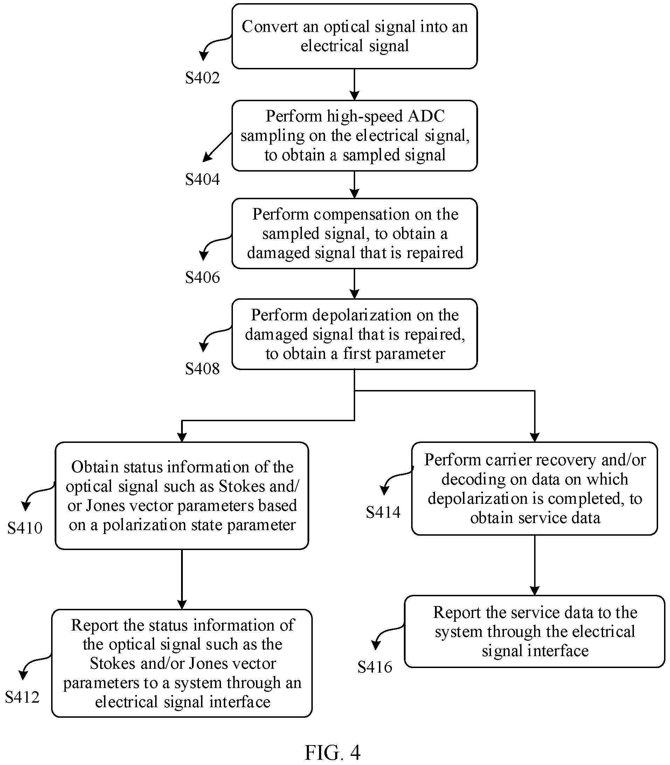

As shown in FIG. 4, in this embodiment, processes such as a procedure in which the optical-electrical apparatus 200 and the optical-electrical apparatus 300 obtain the status information of the optical signal from the optical signal are described.

S402: Convert an optical signal into an electrical signal.

S404: Perform high-speed ADC sampling on the electrical signal, to obtain a sampled signal.

S406: Perform compensation repair on the sampled signal, to obtain a damaged signal that is repaired.

S408: Perform depolarization on the damaged signal that is repaired, to obtain a first parameter.

S410: Obtain status information of the optical signal based on the first parameter.

S412: Report the status information of the optical signal through an electrical signal interface.

S414: Perform carrier recovery and/or decoding on data on which depolarization is completed, to obtain service data. Optionally, the decoding may be forward error correction (Forward Error Correction, FEC) decoding, or the like. This is not limited. Details are not described herein one by one.

Step S416: Report the service data to a system through the electrical signal interface.

It is easy to understand that step S404, step S406, step S414, and step S416 are optional steps.

Optionally, before depolarization is performed on the electrical signal, high-speed ADC sampling is performed on the electrical signal, to obtain a total of four channels of electrical signals in a complex-number form of two polarization states.

Optionally, the four channels of electrical signals are compensated for. This compensates for signal damage caused by dispersion effect or the like in an optical signal process.

Optionally, depolarization is performed on the electrical signal by using a MIMO coefficient in a 2*2 form, to obtain the data on which depolarization is completed.

Optionally, the first parameter includes an optical polarization parameter. In a process in which the optical signal is converted into the electrical signal and the service data is obtained from the electrical signal, the polarization parameter of the optical signal originally needs to be obtained through parsing. Therefore, further processing is performed by using the polarization parameter, of the optical signal, obtained through parsing, to obtain the status information of the optical signal that is used to determine vibration information of an optical fiber through which the optical signal passes. The solution has advantages such as simplicity and low costs.

Optionally, the first parameter further includes: at least one parameter of a pre-forward error correction bit error rate, a post-forward error correction bit error rate, and optical power.

Optionally, the status information of the optical signal includes a Stokes Stokes vector and/or a Jones Jones vector.

Optionally, the status information of the optical signal further includes: at least one parameter of an optical polarization state change rate, the pre-forward error correction bit error rate, the post-forward error correction bit error rate, and the optical power.

Optionally, the pre-forward error correction bit error rate, the post-forward error correction bit error rate, and the optical power may be reported to the system through transparent transmission (without modification or processing), or after being processed, the pre-forward error correction bit error rate, the post-forward error correction bit error rate, and the optical power are reported to the system.

Optionally, normal service data and the status information of the optical signal are output and reported to the system through different electrical signal interfaces or a same electrical signal interface.

Optionally, a rate at which the status information of the optical signal is output and reported to the system is adjustable.

Optionally, a clock frequency corresponding to the output and report rate is any frequency from 1 Hz to 1 MHz.

Optionally, the vibration information of the optical fiber through which the optical signal passes is determined based on the status information of the optical signal, or the system determines, based on the status information of the optical signal, the vibration information of the optical fiber through which the optical signal passes.

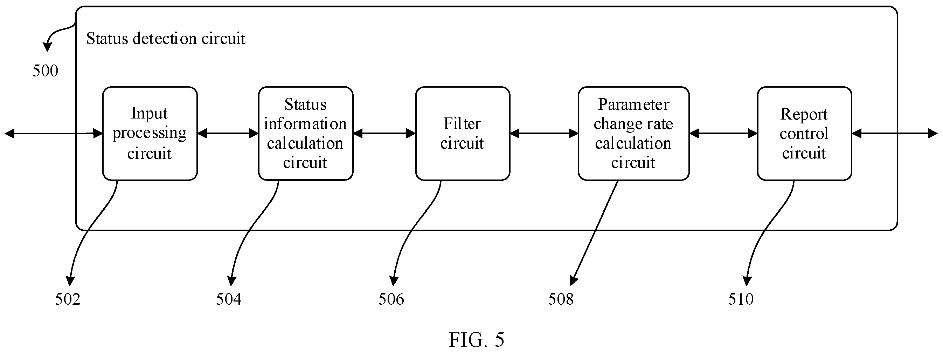

As shown in FIG. 5, in this embodiment, a status detection circuit 500 includes an input processing circuit 502, a status information calculation circuit 504, a filter circuit 506, a parameter change rate calculation circuit 508, and a report control circuit 510.

After receiving a first parameter, the input processing circuit 502 performs sampling and/or average processing on the first parameter.

The status information calculation circuit 504 obtains status information of an optical signal based on the first parameter or a processed first parameter.

The filter circuit 506 is configured to filter or select, from the status information of the optical signal, status information that meets a preset condition. The preset condition includes a condition like a specific frequency, a specific mode, a specific wavelength, or a status information change. This is not limited in this application. Details are not described one by one.

The parameter change rate calculation circuit 508 determines a change rate of the status information based on the status information of the optical signal.

The report control circuit 510 is configured to configure a report mode of the status information of the optical signal, which includes but is not limited to: for example, when the status information of the optical signal changes, the status detection circuit 500 actively reports the status information to a system. Alternatively, in some scenarios, a report function is disabled, to prevent data flooding and channel congestion caused by reporting. In addition, precise report control may be performed based on content of the status information of the optical signal. For example, a report frequency may be adjusted and controlled, for example, a report action is controlled based on a pre-forward error correction bit error rate, a post-forward error correction bit error rate, and/or optical power in the status information of the optical signal. The filter circuit 506 and the report control circuit 510 may help select target status information of the optical signal, and report the target status information in a proper report mode, thereby avoiding increasing processing load on the system.

It is easy to understand that, in the status detection circuit 500, the filter circuit 506, the parameter change rate calculation circuit 508, and the report control circuit 510 are optional.

Optionally, the first parameter includes an optical polarization parameter. In a process in which the optical signal is converted into an electrical signal and service data is obtained from the electrical signal, the polarization parameter of the optical signal originally needs to be obtained through parsing. Therefore, further processing is performed by using the polarization parameter, of the optical signal, obtained through parsing, to obtain the status information of the optical signal that is used to determine vibration information of an optical fiber through which the optical signal passes. The solution has advantages such as simplicity and low costs. Optionally, the first parameter further includes: at least one parameter of the pre-forward error correction bit error rate, the post-forward error correction bit error rate, and the optical power.

Optionally, the status information of the optical signal includes a Stokes Stokes vector and/or a Jones Jones vector.

Optionally, the status information of the optical signal further includes: at least one parameter of an optical polarization state change rate, the pre-forward error correction bit error rate, the post-forward error correction bit error rate, and the optical power.

Optionally, the pre-forward error correction bit error rate, the post-forward error correction bit error rate, and the optical power may be reported to the system through transparent transmission (without modification or processing), or after being processed, the pre-forward error correction bit error rate, the post-forward error correction bit error rate, and the optical power are reported to the system.

Optionally, normal service data and the status information of the optical signal are output and reported to the system through different electrical signal interfaces.

Optionally, a rate at which the status information of the optical signal is output and reported to the system is adjustable.

Optionally, a clock frequency corresponding to the output and report rate is any frequency from 1 Hz to 1 MHz.

Optionally, the status detection circuit 500 may be implemented by using an ASIC or another processor. This is not limited herein. Details are not described one by one.

Optionally, a function of the status detection circuit 500 may be implemented by using a software technology.

Optionally, functions of the input processing circuit 502, the status information calculation circuit 504, the filter circuit 506, the parameter change rate calculation circuit 508, and the report control circuit 510 may be implemented by a hardware circuit or software. This is not limited herein.

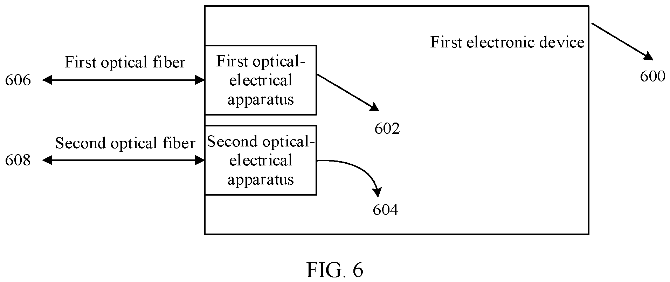

FIG. 6 shows a first electronic device 600 according to an embodiment of this application. The first electronic device 600 includes a housing, a circuit board, and at least one optical-electrical apparatus, connected to the circuit board, provided in the foregoing embodiments. For example, two optical-electrical apparatuses are included: a first optical-electrical apparatus 602 and a second optical-electrical apparatus 604. The first optical-electrical apparatus is connected to a first optical fiber 606, and the second optical-electrical apparatus 604 is connected to a second optical fiber 608. Each of the optical-electrical apparatuses is configured to determine vibration information of the optical fiber based on status information of an optical signal in the optical fiber connected to the optical-electrical apparatus. Through comprehensive determining, a more secure and reliable optical-electrical apparatus is selected for service data transmission, thereby improving stability of an entire communication network.

Optionally, the electronic device 600 further includes a vibration processing circuit. The vibration processing circuit obtains, based on the status information of the optical signal, the vibration information of the optical fiber through which the optical signal passes, where the vibration processing circuit is located in the optical-electrical apparatuses or on the circuit board.

Optionally, the first optical-electrical apparatus 602 obtains the status information of the optical signal related to the first optical fiber 606, and the second optical-electrical apparatus 604 obtains the status information of the optical signal related to the second optical fiber 608. When the status information of the optical signals is associated to some extent, for example, when the status information of the optical signals in the two optical fibers is close to, similar to, or in another specific relationship, it may be determined that the first optical fiber 606 and the second optical fiber 608 are located in a same optical cable. In an actual application process, it needs to be determined whether optical fibers related to the first electronic device 600 are located in a same optical cable or different optical cables. In this manner, a data information transmission channel of the first electronic device 600 is optimized. For example, an active transmission channel and a standby transmission channel of a service are located in different optical cables. The optical cable is a device that includes a plurality of optical fibers and related reinforcing and protection components. The status information of the optical signals in the two optical fibers is analyzed, so that accuracy of vibration information of environments around the optical fibers can be improved. In addition, network optimization can be performed, to prevent the optical fibers used by the active transmission channel and the standby transmission channel of the service data from being in the same optical cable, thereby improving reliability of the communication network.

Optionally, the first electronic device 600 determines, based on the status information of the optical signal reported by the first optical-electrical apparatus 602 and the status information of the optical signal reported by the second optical-electrical apparatus 604, to transmit the service data through the first optical fiber 606 or the second optical fiber 608 as a service transmission channel. For example, when the status information of the optical signal reported by the first optical-electrical apparatus 602 indicates that an environment in which the first optical fiber 606 is located vibrates, and the status information of the optical signal reported by the second optical-electrical apparatus 604 indicates that an environment in which the second optical fiber 608 is located does not vibrate, the first electronic device 600 preferably selects the second optical-electrical apparatus 604 and the second optical fiber 608 as the service transmission channel.

Optionally, when an exception occurs in the status information of the optical signal, a warning may be generated for a fault of the optical-electrical apparatus, and check or replacement may be performed in a timely manner.

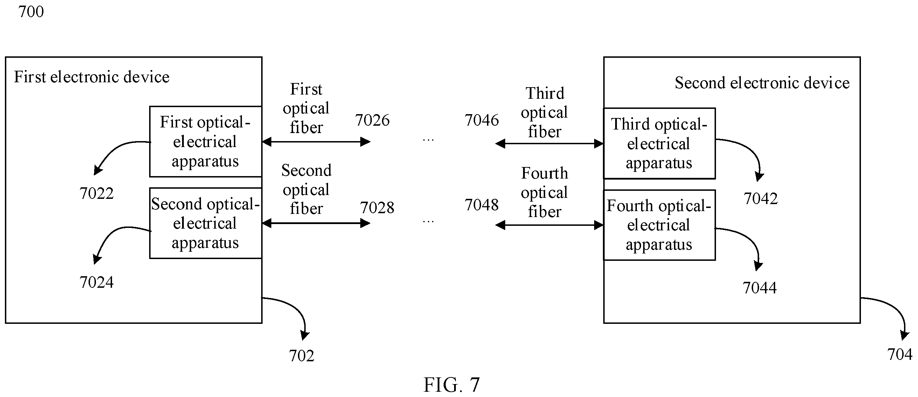

FIG. 7 shows an optical communication system 700 according to an embodiment of this application. The optical communication system 700 includes at least one of the foregoing electronic devices, for example, includes a first electronic device 702 and a second electronic device 704.

The first electronic device 702 includes a first optical-electrical apparatus 7022 and a connected first optical fiber 7026, and a second optical-electrical apparatus 7024 and a connected second optical fiber 7028.

The second electronic device 704 includes a third optical-electrical apparatus 7042 and a connected third optical fiber 7046, and a fourth optical-electrical apparatus 7044 and a connected fourth optical fiber 7048.

Implementation and functions of the electronic device and the optical-electrical apparatus in this embodiment are consistent with those in the foregoing embodiments. Details are not described herein.

When the first electronic device 702 is directly connected to the second electronic device 704 and there is no intermediate device, the first optical fiber 7026 and the third optical fiber 7046 may be a same optical fiber, and the second optical fiber 7028 and the fourth optical fiber 7048 may be a same optical fiber.

When the first electronic device 702 is indirectly connected to the second electronic device 704, the optical communication system 700 further includes at least one switch and router that are connected to the electronic devices as intermediate devices.

Optionally, the first electronic device 702 and the first electronic device 704 each include at least one optical-electrical apparatus in the foregoing embodiments.

In another embodiment of this application, the foregoing functions and methods are implemented by using a chip. The chip includes an electrical signal processing circuit, an electrical signal processing circuit and a status detection circuit.

Optionally, the status detection circuit includes an input processing circuit and a status parameter calculation circuit.

Optionally, the status detection circuit further includes at least one circuit of a filter circuit, a parameter change rate calculation circuit, and a report control circuit. Functions implemented and methods performed by the circuits in this embodiment are consistent with functions implemented and methods performed by corresponding circuits in the foregoing optical-electrical apparatus 200, 300, or 500. Details are not described herein one by one.

In another embodiment of this application, a chip is provided. The chip includes an input processing circuit and a status parameter calculation circuit. The input processing circuit is configured to perform sampling and/or average processing on a first parameter. The status parameter calculation circuit is configured to obtain, based on a first parameter obtained through sampling and/or average processing, status information of an optical signal through processing. The first parameter includes an optical polarization parameter of the optical signal.

Optionally, the chip further includes at least one circuit of a filter circuit, a parameter change rate calculation circuit, and a report control circuit. The filter circuit is configured to filter or select, from the status information of the optical signal, status information that meets a preset condition. The parameter change rate calculation circuit is configured to obtain a change rate of the status information of the optical signal through processing. The report control circuit is configured to configure a report mode of the status information of the optical signal.

Optionally, the first parameter further includes: at least one parameter of a pre-forward error correction bit error rate, a post-forward error correction bit error rate, and optical power.

Optionally, the status information of the optical signal includes a Stokes Stokes vector and/or a Jones Jones vector.

Optionally, the status information of the optical signal further includes: at least one parameter of an optical polarization state change rate, the pre-forward error correction bit error rate, the post-forward error correction bit error rate, and the optical power.

In another embodiment of this application, the foregoing technical solution may be used to manufacture a light sensing and detection device, to detect vibration in an area through which an optical fiber passes, and predict an activity like an earthquake in the area. It is easy to understand that such a light sensing and detection device also falls within the protection scope of this application.

The processor, the chip, or the circuit provided in embodiments of this application may include one or more processing units. For example, the processor or the processing unit may include an application processor (application processor, AP), a modem processor, a graphics processing unit (graphics processing unit, GPU), an image signal processor (image signal processor, ISP), a controller, a video codec, an ASIC, a digital signal processor (digital signal processor, DSP), a field programmable gate array (field programmable gate array, FPGA), a neural-network processing unit (neural-network processing unit, NPU), and/or a circuit or a chip that can implement the foregoing functions. This is not limited herein. Details are not described one by one. Different processing circuits may be independent components, or may be integrated into one or more processors.

An embodiment of this application provides an electronic device, including a processor and a memory configured to store processor-executable instructions. The processor is configured to implement the foregoing methods or functions when executing the instructions.

The electronic device may be an electronic device that needs to use an optical-electrical apparatus, for example, a server, a router, or a switch. A specific type of the electronic device is not particularly limited in embodiments of this application.

An embodiment of this application provides a nonvolatile computer-readable storage medium, storing computer program instructions. When the computer program instructions are executed by a processor, the foregoing methods are implemented.

An embodiment of this application provides a chip. After being powered on and running, the chip may implement the optical signal status information detection method mentioned in other embodiments of this application.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (Read Only Memory, ROM), an erasable programmable read-only memory (Electrically Programmable Read-Only-Memory, EPROM or a flash memory), a static random access memory (Static Random-Access Memory, SRAM), and any suitable combination thereof.

The computer-readable program instructions or code described herein may be downloaded from a computer-readable storage medium to each computing/processing device, or downloaded to an external computer or an external storage device over a network, such as the Internet, a local area network, a wide area network, and/or a wireless network.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or the block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit, an ASIC, or an FPGA) that performs a corresponding function or action, or may be implemented by a combination of hardware and software, for example, firmware.

Embodiments of this application are described above. The foregoing descriptions are examples, are not exhaustive, and are not limited to the disclosed embodiments. Many modifications and variations are apparent to a person of ordinary skill in the art without departing from the scope of the described embodiments. Selection of terms used in this specification is intended to best explain embodiment principles, actual application, or improvements to technologies in the market, or to enable another person of ordinary skill in the art to understand the embodiments disclosed in this specification.

## Claims

1. An optical-electrical apparatus, wherein the optical-electrical apparatus comprises an optical-to-electrical conversion circuit, an electrical signal processing circuit, an electrical signal interface circuit, and a status detection circuit, wherein
the optical-to-electrical conversion circuit is configured to convert the optical signal into an electrical signal; the electrical signal processing circuit is configured to output a first parameter of the optical signal based on the electrical signal, wherein the first parameter comprises an optical polarization parameter; and
the status detection circuit is configured to obtain status information of the optical signal based on the first parameter, wherein the status information of the optical signal is output through the electrical signal interface circuit.

2. The optical-electrical apparatus according to claim 1, wherein the first parameter further comprises:
at least one parameter of a pre-forward error correction bit error rate, a post-forward error correction bit error rate, and optical power.

3. The optical-electrical apparatus according to claim 1 or 2, wherein the status information of the optical signal comprises a Stokes Stokes vector and/or a Jones Jones vector.

4. The optical-electrical apparatus according to any one of claims 1 to 3, wherein the status information of the optical signal further comprises:
at least one parameter of an optical polarization state change rate, the pre-forward error correction bit error rate, the post-forward error correction bit error rate, and the optical power.

5. The optical-electrical apparatus according to any one of claims 1 to 4, wherein the electrical signal processing circuit is further configured to obtain service data based on the electrical signal, and the service data is output via the electrical signal interface circuit.

6. The optical-electrical apparatus according to any one of claims 1 to 5, wherein the electrical signal processing circuit and the status detection circuit are packaged in a single chip.

7. The optical-electrical apparatus according to any one of claims 1 to 6, wherein the status detection circuit comprises an input processing circuit and a status parameter calculation circuit, wherein
the input processing circuit is configured to perform sampling and/or average processing on the first parameter; and
the status parameter calculation circuit is configured to obtain, based on a first parameter obtained through sampling and/or average processing, the status information of the optical signal through processing.

8. The optical-electrical apparatus according to claim 7, wherein the status detection circuit further comprises at least one circuit of a filter circuit, a parameter change rate calculation circuit, and a report control circuit, wherein the filter circuit is configured to filter or select, from the status information of the optical signal, status information that meets a preset condition, the parameter change rate calculation circuit is configured to obtain a change rate of the status information of the optical signal through processing, and the report control circuit is configured to configure a report mode of the status information of the optical signal.

9. The optical-electrical apparatus according to any one of claims 1 to 8, wherein the status information of the optical signal is used to determine vibration information of an optical fiber through which the optical signal passes.

10. An electronic device, wherein the electronic device comprises a housing, a circuit board, and at least one optical-electrical apparatus, connected to the circuit board, according to any one of claims 1 to 9.

11. The electronic device according to claim 10, wherein the electronic device further comprises a vibration processing circuit, and the vibration processing circuit is configured to obtain, based on the status information of the optical signal, the vibration information of the optical fiber through which the optical signal passes, wherein the vibration processing circuit is located in the optical-electrical apparatus or on the circuit board.

12. The electronic device according to claim 10 or 11, wherein the at least one optical-electrical apparatus according to any one of claims 1 to 9 comprises a first optical-electrical apparatus and a second optical-electrical apparatus, the first optical-electrical apparatus is configured to report status information of a first optical signal to the electronic device, and the second optical-electrical apparatus is configured to report status information of a second optical signal to the electronic device.

13. The electronic device according to claim 12, wherein the electronic device is configured to determine, based on the status information of the first optical signal and/or the status information of the second optical signal, to use the first optical-electrical apparatus or the second optical-electrical apparatus to transmit service data.

14. The electronic device according to claim 12 or 13, wherein the electronic device is configured to determine, based on the status information of the first optical signal and the status information of the second optical signal, whether a first optical fiber and a second optical fiber belong to a first optical cable, wherein the first optical fiber is connected to the first optical-electrical apparatus and is configured to transmit the first optical signal, and the second optical fiber is connected to the second optical-electrical apparatus and is configured to transmit the second optical signal.

15. An optical communication system, wherein the optical communication system comprises at least one electronic device according to any one of claims 10 to 14, and at least one switch or router connected to the electronic device, wherein the at least one switch or router is configured to perform data communication with the electronic device.

16. A chip, wherein the chip comprises an electrical signal processing circuit, an electrical signal processing circuit and a status detection circuit, wherein
the electrical signal processing circuit is configured to output: based on an input electrical signal, a first parameter of an optical signal corresponding to the electrical signal, wherein the first parameter comprises an optical polarization parameter; and
the status detection circuit is configured to obtain status information of the optical signal based on the first parameter, wherein the status information of the optical signal is output via an electrical signal interface circuit connected to the chip.

17. The chip according to claim 16, wherein the first parameter further comprises:
at least one parameter of a pre-forward error correction bit error rate, a post-forward error correction bit error rate, and optical power.

18. The chip according to claim 16 or 17, wherein the status information of the optical signal comprises a Stokes Stokes vector and/or a Jones Jones vector.

19. The chip according to any one of claims 16 to 18, wherein the status information of the optical signal further comprises:
at least one parameter of an optical polarization state change rate, the pre-forward error correction bit error rate, the post-forward error correction bit error rate, and the optical power.

20. The chip according to any one of claims 16 to 19, wherein the electrical signal processing circuit is further configured to obtain service data based on the electrical signal, and the service data is output via the electrical signal interface circuit.

21. The chip according to any one of claims 16 to 20, wherein the status detection circuit comprises an input processing circuit and a status parameter calculation circuit, wherein
the input processing circuit is configured to perform sampling and/or average processing on the first parameter; and
the status parameter calculation circuit is configured to obtain, based on a first parameter obtained through sampling and/or average processing, the status information of the optical signal through processing.

22. The chip according to claim 21, wherein the status detection circuit further comprises at least one circuit of a filter circuit, a parameter change rate calculation circuit, and a report control circuit, wherein the filter circuit is configured to filter or select, from the status information of the optical signal, status information that meets a preset condition, the parameter change rate calculation circuit is configured to obtain a change rate of the status information of the optical signal through processing, and the report control circuit is configured to configure a report mode of the status information of the optical signal.

23. The chip according to any one of claims 16 to 22, wherein the status information of the optical signal is used to determine vibration information of an optical fiber through which the optical signal passes.

24. An optical signal status information detection method, applied to an optical-electrical apparatus or chip, wherein the method comprises:
outputting, based on an input electrical signal, a first parameter of an optical signal corresponding to the electrical signal, wherein the first parameter comprises an optical polarization parameter;
obtaining status information of the optical signal based on the first parameter; and
outputting the status information of the optical signal.

25. The detection method according to claim 24, wherein the first parameter further comprises:
at least one parameter of a pre-forward error correction bit error rate, a post-forward error correction bit error rate, and optical power.

26. The detection method according to claim 24 or 25, wherein the status information of the optical signal comprises a Stokes Stokes vector and/or a Jones Jones vector.

27. The detection method according to any one of claims 24 to 26, wherein
the status information of the optical signal further comprises:
at least one parameter of an optical polarization state change rate, the pre-forward error correction bit error rate, the post-forward error correction bit error rate, and the optical power.

28. The detection method according to any one of claims 24 to 27, wherein the method further comprises: after performing sampling and/or average processing on the first parameter, obtaining, based on a first parameter obtained through sampling and/or average processing, the status information of the optical signal through processing.

29. The detection method according to any one of claims 24 to 28, wherein the method further comprises:
filtering or selecting, from the status information of the optical signal, status information that meets a preset condition; or
obtaining a change rate of the status information of the optical signal through processing; or
configuring a report mode of the status information of the optical signal.

30. The detection method according to any one of claims 24 to 29, wherein the status information of the optical signal is used to determine vibration information of an optical fiber through which the optical signal passes.

31. An optical signal status information detection method, applied to an electronic device, wherein
the electronic device comprises at least one optical-electrical apparatus according to any one of claims 1 to 8; and
the optical-electrical apparatus performs the optical signal status information detection method according to any one of claims 23 to 29.

32. The detection method according to claim 31, wherein
the at least one optical-electrical apparatus according to any one of claims 1 to 9 comprises a first optical-electrical apparatus and a second optical-electrical apparatus, the first optical-electrical apparatus reports status information of a first optical signal to the electronic device, and the second optical-electrical apparatus reports status information of a second optical signal to the electronic device.

33. The detection method according to claim 32, wherein the electronic device determines, based on the status information of the first optical signal and/or the status information of the second optical signal, to use the first optical-electrical apparatus or the second optical-electrical apparatus to transmit service data.

34. The detection method according to claim 32 or 33, wherein the electronic device determines, based on the status information of the first optical signal and the status information of the second optical signal, whether a first optical fiber and a second optical fiber belong to a first optical cable, wherein the first optical fiber is connected to the first optical-electrical apparatus and is configured to transmit the first optical signal, and the second optical fiber is connected to the second optical-electrical apparatus and is configured to transmit the second optical signal.

35. A nonvolatile computer-readable storage medium, storing computer program instructions, wherein when the computer program instructions are executed by a processor, the method according to any one of claims 24 to 34 is implemented.
